# EUROPEAN PATENT SPECIFICATION

(11) **EP 3 658 097 B1**
(45) Date of publication and mention of the grant of the patent: **15.09.2021**
(21) Application number: 18733346.3
(22) Date of filing: 14.06.2018
(51) Int. Cl.: A61G 5/10

(54) **BRAKE**
BREMSE
FREIN

(30) Priority: 28.07.2017 SI 201700223
(43) Date of publication of application: 03.06.2020
(73) Proprietor: DEZZIV d.o.o., 3327 Smartno ob Paki (SI)
(72) Inventor: STAKNE, Jozef, 3327 Smartno ob Paki (SI)
(74) Representative: Sveticic, Andrej
(86) International application number: PCT/IB2018/054200
(87) International publication number: WO 2019/021071

(56) References cited:
- US-A- 4 887 830

## Description

### Field of Invention

The invention refers to a trolley wheel brake, such as a wheelchair, pushchair, etc.

### Prior Art

Many handbrakes are known from prior art that prevent rotation of trolley wheels, thus stabilizing the position of the trolley in a certain position. Such brakes do not enable wheel braking only in one direction. This is why brakes have been developed that enable rotation of a wheel in one direction and prevent its rotation in the opposite direction. Such brake is useful when pushing/driving a trolley uphill.

A brake of this type is known from patent US 6253880. The invention relates to a brake formed of a ratchet gear. The brake is fastened to the frame of the trolley and comprises an axle, a brake wheel rotatable on the axle and provided with an internal toothing, a pin movably arranged through said axle, and a lever mechanism with a first handle that enables the brake wheel to engage with the outer circumference of the trolley wheel. The internal toothing of the brake wheel and the pin are designed in a way that the pin slides on the internal toothing when the trolley wheel rotates in one direction, while the pin locks the brake wheel when the trolley rotates in the opposite direction. The trolley can thus be driven uphill, while its rearward movement is at the same time prevented.

The brake disclosed in US 4887830 functions in a similar way. The brake can assume three positions: a first position, in which rotation of the wheelchair wheel is enabled, a second position, in which rotation of the wheelchair wheel is disabled, and a third position, in which rotation of the wheelchair wheel is disabled in one direction only. The brake comprises a crank mechanism with a first handle member for shifting the brake into one of said three positions, an axle, and a brake element pivotally mounted on the axle and optionally engaging with the peripheral surface of the wheelchair wheel. The brake element is designed in a way that the radius of the braking surface increases on the periphery. The third position of the brake enables rotation of the wheelchair wheel in one direction, while the brake element engages with the wheelchair wheel when the wheel rotates in the opposite direction, thus preventing its rotation.

A drawback of known brakes is their ability to enable unidirectional braking only in direction of the movement of a trolley. In a rearward uphill movement of a trolley, for instance, unidirectional braking of the trolley with known brakes is not enabled.

### Technical Problem

The technical problem is to conceive a brake that will be simple in construction, reliable, and would selectively enable unidirectional braking of a trolley wheel either in forward movement or in rearward movement.

### Solution to the Technical Problem

The technical problem is solved by the brake for a trolley that comprises:
- a support connectable with its first end with a frame of the trolley,
- a first axle connected with another end of the support and peripherally provided with three indents,
- a first handle with a detent, said first handle being pivotally arranged on said first axle, wherein the first handle can assume three positions on the first axle, which are defined by the three indents,
- a pin that is firmly connected with one of its ends with the first handle and arranged parallel to the first axle at a radial distance therefrom,
- an eccentric ring with a closed bottom, in which at least an arcuate recess concentric with the first axle is formed, through which the pin projects, wherein the eccentric ring is pivotally mounted on the first axle and can engage with the outer periphery of a trolley wheel,
- a tension spring connecting the inner periphery of the eccentric ring and the pin, and
- a stop element projecting from the first axle, which can lean against the inner periphery of the eccentric ring thus preventing pivoting of the eccentric ring around the first axle in one direction.

Based on a selection by the user, the first handle with the detent can assume three positions: a first end position, a second end position, and a middle position located between both end positions.

In the middle position, the eccentric ring is remote from the outer periphery of the trolley wheel and the trolley wheel can freely rotate. In this position, the first handle with the detent, the tension spring, and the stop element are aligned. The tension spring forces the eccentric ring into the central position.

A shift of the first handle from the middle position to the first end position causes a shift of the eccentric ring such that the outer periphery of the eccentric ring contacts the outer periphery of the trolley wheel. While the trolley wheel rotates in one direction it pushes the eccentric ring away from the trolley wheel against the force of the tension spring, wherewith the rotation of the trolley wheel is enabled. While the trolley wheel rotates in another direction it pushes the eccentric ring against the trolley wheel for the blocking effect, wherewith the rotation of the trolley wheel is disabled. The stop element leans against the inner periphery of the eccentric ring and prevents further rotation of the eccentric ring around the first axle and consequently too excessive blocking of the eccentric ring against the trolley wheel.

When the first handle is shifted from the middle position to the second end position, the situation is similar to the above-identified one, only that unidirectional braking is here achieved in the opposite direction of the trolley wheel rotation.

The support can be firmly connected with the frame of the trolley. Such brake is suitable to be arranged on a trolley that is already provided with a conventional bidirectional brake.

In a further embodiment, the support is articulated with the frame of the trolley. In this case, the middle part of the support is articulated with the crank mechanism with the second handle which can in turn be articulated with the frame of the trolley. If the second handle is shifted, the eccentric ring can, while the first handle is in the middle position, additionally assume the position of the bidirectional braking of the trolley wheel.

An advantage of the brake of the invention over known brakes lies in its ability to enable unidirectional braking of a trolley wheel either in forward movement or in rearward movement. A further advantage is a simple construction of the brake and its reliable operation.

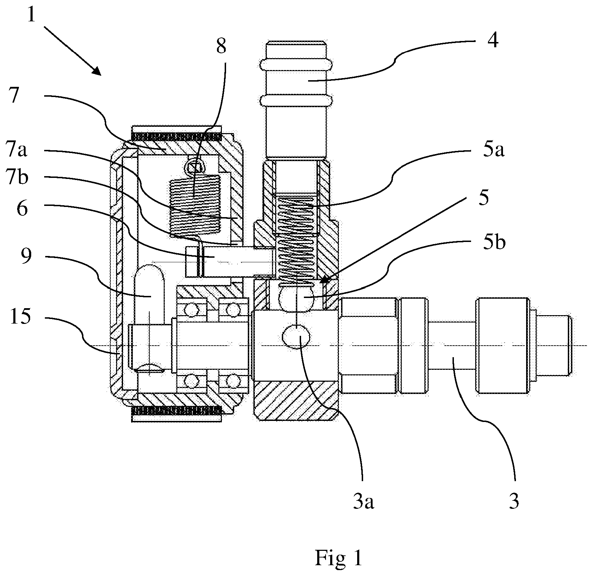

Figure 1: Brake in cross-section

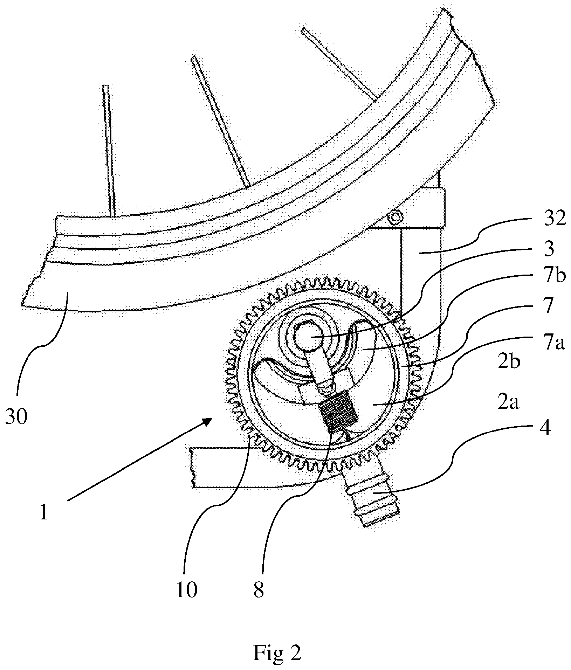

Figure 2: Brake in side view

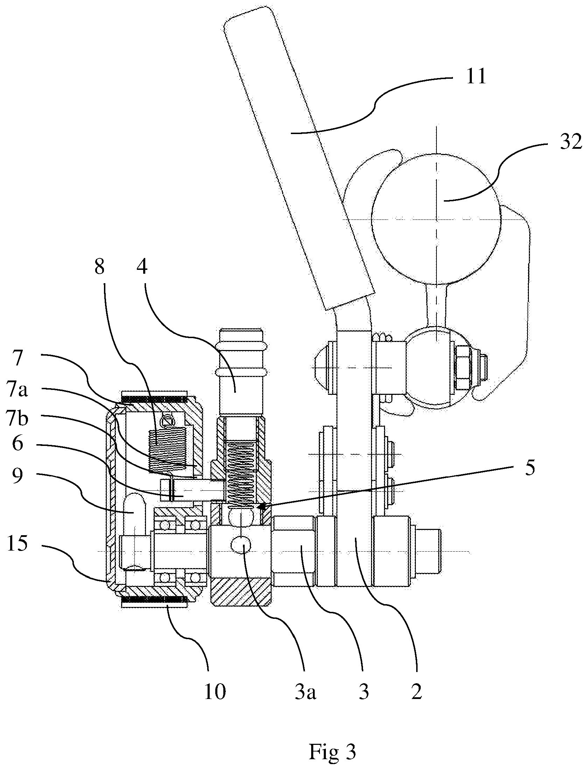

Figure 3: Brake with a crank mechanism in cross-section

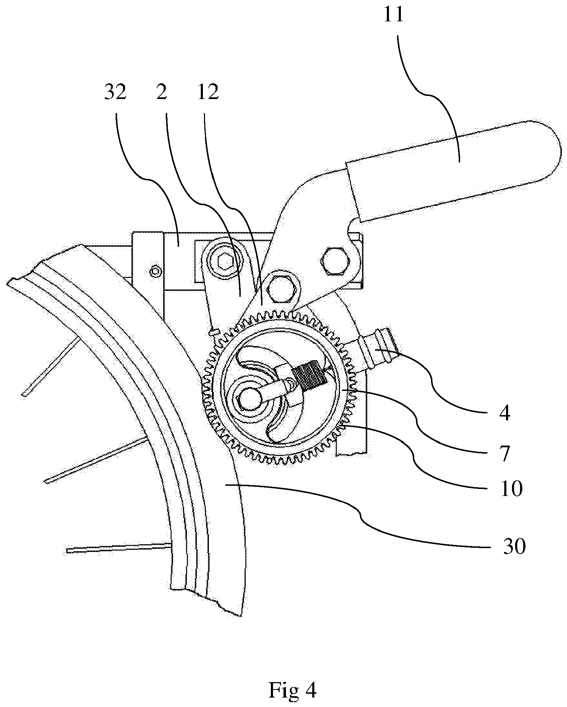

Figure 4: Brake with a crank mechanism in side view

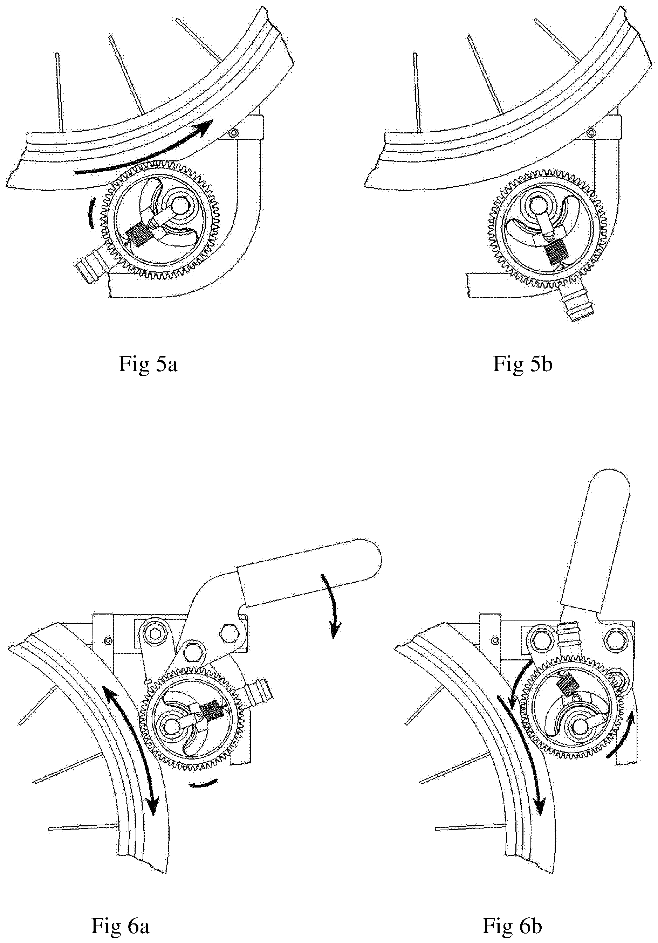

Figure 5a: Brake in a position of unidirectional braking
Figure 5b: Brake in a released position
Figure 6a: Brake with a crank mechanism in a position of bidirectional braking
Figure 6b: Brake with a crank mechanism in a position of unidirectional braking

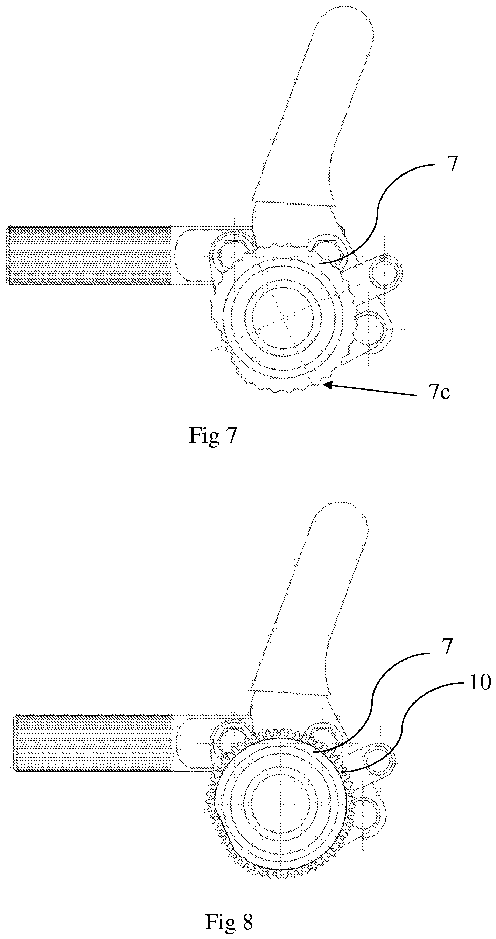

Figure 7: Brake with an eccentric ring with a corrugated outer periphery
Figure 8: Brake with an eccentric ring with a corrugated brake pad

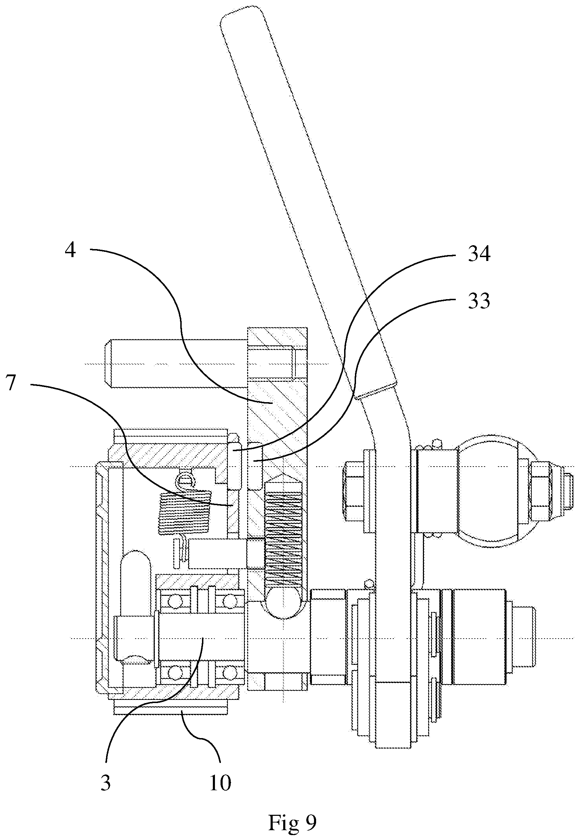

Figure 9: Brake with two permanent magnets

The invention is described in more detail hereinbelow.

The technical problem is solved by a brake 1 for a trolley that comprises:
- a support 2 connectable with its first end with a frame 32 of the trolley,
- a first axle 3 connected with another end of the support and peripherally provided with three indents 3a,
- a first handle 4 with a detent 5, said handle 4 being pivotally arranged on said first axle 3, and wherein the first handle 4 can assume three positions on the first axle 3, which are defined by the three indents 3a,
- a pin 6 that is firmly connected with one of its ends with the first handle 4 and arranged parallel to the first axle 3 at a radial distance therefrom,
- an eccentric ring 7 with a closed bottom 7a, in which at least an arcuate recess 7b concentric with the first axle is formed, through which the pin 6 projects, wherein the eccentric ring 7 is pivotally mounted on the first axle 3 and engages with the outer periphery of a trolley wheel 30,
- a tension spring 8 connecting the inner periphery of the eccentric ring 7 and the pin 6, and
- a stop element 9 projecting from the first axle 3, which can lean against the inner periphery of the eccentric ring 7 thus preventing rotation of the eccentric ring 7 around the first axle 3 in one direction.

Based on a selection by the user, the first handle 4 with the detent 5 can assume three positions corresponding to three indents 3a: a first end position, a second end position, and a middle position located between both end positions.

In the middle position, the eccentric ring is remote from the outer periphery 30 of the trolley wheel and the trolley wheel can freely rotate. In this position, the first handle 4 with the detent 5, the tension spring 8, and the stop element 9 are aligned. The tension spring 8 forces the eccentric ring 7 into the central position.

The detent 5 of the first handle 4 can be formed of a pressure spring 5a and a ball 5b that can engage with said three indents 3a on the first axle 3.

A shift of the first handle 4 from the middle position to the first end position causes a shift of the eccentric ring 7 such that the outer periphery of the eccentric ring contacts the outer periphery of the trolley wheel. While the trolley wheel 30 rotates in one direction it pushes the eccentric ring 7 away from the trolley wheel 30 against the force of the tension spring 8, wherewith the rotation of the trolley wheel is enabled. While the trolley wheel rotates in another direction it pushes the eccentric ring 7 against the trolley wheel 30 due to the blocking effect, wherewith the rotation of the trolley wheel is disabled. The stop element 9 leans against the inner periphery of the eccentric ring 7 and prevents further rotation of the eccentric ring around the first axle 3 and consequently too excessive blocking of the eccentric ring 7 against the trolley wheel.

When the first handle is shifted from the middle position to the second end position, the situation is similar to the above-identified one, only that unidirectional braking is here achieved in the opposite direction of the trolley wheel rotation.

The outer periphery of the eccentric ring 7 can be corrugated 7c, what improves the efficiency of braking in both dry and wet conditions. The eccentric ring 7 can further be provided on its outer periphery by a brake pad 10. The brake pad 10 can be corrugated from the outer side. The material of the brake pad 10 can be for instance glass-fiber reinforced polychloroprene.

The support 2 can be firmly connected with the frame of the trolley. Such brake is suitable to be arranged on a trolley that is already provided with a conventional bidirectional brake.

In a further embodiment, the support 2 can be articulated with the frame 32 of the trolley. In this case, the middle part of the support 2 is articulated with the crank mechanism 12 with the second handle 11 which can in turn be articulated with the frame 32 of the trolley. If the second handle is shifted, the eccentric ring 7 can, while the first handle 4 is in the middle position, additionally assume the position of the bidirectional braking of the trolley wheel 30.

The brake 1 can further comprise a cover 15, with which the eccentric ring 7 is covered.

The brake 1 can further comprise a first 33 and a second 34 permanent magnet, wherein the first permanent magnet 33 is arranged on the first handle 4 facing the eccentric ring 7, and the second permanent magnet 34 is arranged on the eccentric ring 7 opposite the first permanent magnet 33, when the first handle 4 is in its middle position. The first 33 and the second 34 permanent magnets must be oriented in a way to attract each other. It is the function of the permanent magnets to prevent oscillations of the eccentric ring 7 around the first axle 3 when the trolley moves on an uneven surface (e. g. sand); the eccentric ring 7, more precisely its brake pad 10, is herewith prevented from engaging with the outer periphery of the trolley wheel, what would cause an undesired braking of the trolley.

## Claims

1. A brake (1) for a trolley that comprises:
- a support (2) connectable with its first end with a frame (32) of the trolley,
- a first axle (3) connected with another end of the support and peripherally provided with three indents (3a),
- a first handle (4) with a detent (5), said handle (4) being pivotally arranged on said first axle (3), and wherein the first handle (4) can assume three positions on the first axle (3), which are defined by the three indents (3a),
- a pin (6) that is firmly connected with one of its ends with the first handle (4) and arranged parallel to the first axle (3) at a radial distance therefrom,
- an eccentric ring (7) with a closed bottom (7a), in which at least an arcuate recess (7b) concentric with the first axle is formed, through which the pin (6) projects, wherein the eccentric ring (7) is pivotally mounted on the first axle (3) and can engage with the outer periphery of a trolley wheel (30),
- a tension spring (8) connecting the inner periphery of the eccentric ring (7) and the pin (6), and
- a stop element (9) projecting from the first axle (3), which can lean against the inner periphery of the eccentric ring (7) thus preventing rotation of the eccentric ring (7) around the first axle (3) in one direction.

2. Brake according to claim 1, wherein, based on a selection by the user, the first handle (4) with the detent (5) can be positioned into three positions corresponding to three indents (3a): a first end position, a second end position, and a middle position located between both end positions.

3. Brake according to any preceding claim, wherein the first handle (4) with the detent (5), the tension spring (8), and the stop element (9) are aligned when the first handle (4) is in the middle position.

4. Brake according to any preceding claim, wherein the detent (5) of the first handle (4) is formed of a pressure spring (5a) and a ball (5b) that can engage with said three indents (3a) on the first axle (3).

5. Brake according to any preceding claim, wherein the eccentric ring (7) is corrugated (7c) on its outer periphery.

6. Brake according to any preceding claim, wherein the eccentric ring (7) is provided with a brake pad (10).

7. Brake according to claim 6, wherein the brake pad (10) is corrugated from the outer side.

8. Brake according to claim 6 or 7, wherein the brake pad (10) is formed of glass-fiber reinforced polychloroprene.

9. Brake according to any preceding claim, wherein the support (2) is firmly connectable with the frame of the trolley.

10. Brake according to any of claims 1 to 8, wherein the support (2) can be articulated with the frame (32) of the trolley.

11. Brake according to claim 10, which further comprises a crank mechanism (12) and a second handle (11), wherein the middle part of the holder (2) is articulated via the crank mechanism (12) with the second handle (11) which can be articulated with the frame (32) of the trolley, such that by moving the second handle the eccentric ring (7) can be brought into a position of bidirectional braking of the trolley wheel (30), when the first handle (4) is in the middle position.

12. Brake according to any preceding claim, which further comprises a cover (15), with which the eccentric ring (7) can be covered.

13. Brake according to any preceding claim, which further comprises a first (33) and a second (34) permanent magnet, wherein the first permanent magnet (33) is arranged on the first handle (4) facing the eccentric ring (7), and the second permanent magnet (34) is arranged on the eccentric ring (7) opposite the first permanent magnet (33), when the first handle (4) is in its middle position, wherein the first (33) and the second (34) permanent magnets are oriented in a way to attract each other.

## Patentansprüche

1. Bremse (1) für einen Rollwagen, die Folgendes umfasst:
- eine Stütze (2), mit ihrem ersten Ende verbindbar mit einem Rahmen (32) des Rollwagens,
- eine erste Achse (3), verbunden mit einem anderen Ende der Stütze und am Umfang mit drei Vertiefungen (3a) versehen,
- einen ersten Griff (4) mit einer Raste (5), wobei der Griff (4) schwenkbar an der ersten Achse (3) angeordnet ist, und wobei der erste Griff (4) drei Positionen an der ersten Achse (3) einnehmen kann, die durch die drei Vertiefungen (3a) definiert sind,
- einen Stift (6), der mit einem seiner Enden fest mit dem ersten Griff (4) verbunden ist und parallel zur ersten Achse (3) bei einem radialen Abstand davon angeordnet ist,
- einen exzentrischen Ring (7) mit einem geschlossenen Boden (7a), in dem zumindest eine bogenförmige Vertiefung (7b), konzentrisch mit der ersten Achse, ausgebildet ist, durch die der Stift (6) hindurchragt, wobei der exzentrische Ring (7) schwenkbar an der ersten Achse (3) montiert ist und mit dem äußeren Umfang des Rollwagenrads (30) in Eingriff kommen kann,
- eine Spannfeder (8), die den inneren Umfang des exzentrischen Rings (7) und den Stift (6) verbindet, und
- ein Anschlagselement (9), das aus der ersten Achse (3) herausragt, das am inneren Umfang des exzentrischen Rings (7) anliegen kann, so eine Drehung des exzentrischen Rings (7) um die erste Achse (3) in einer Richtung verhindernd.

2. Bremse nach Anspruch 1, wobei, basierend auf einer Auswahl durch den Benutzer, der erste Griff (4) mit der Raste (5) in drei Positionen entsprechend drei Vertiefungen (3a) positioniert werden kann: einer ersten Endposition, einer zweiten Endposition und einer mittleren Position, die sich zwischen beiden Endpositionen befindet.

3. Bremse nach einem der vorhergehenden Ansprüche, wobei der erste Griff (4) mit der Raste (5), die Spannfeder (8) und das Anschlagselement (9) ausgerichtet sind, wenn der erste Griff (4) in der mittleren Position ist.

4. Bremse nach einem der vorhergehenden Ansprüche, wobei die Raste (5) des ersten Griffs (4) aus einer Druckfeder (5a) und einer Kugel (5b), die mit den drei Vertiefungen (3a) an der ersten Achse (3) in Eingriff kommen kann, gebildet ist.

5. Bremse nach einem der vorhergehenden Ansprüche, wobei der exzentrische Ring (7) an seinem äußeren Umfang gewellt (7c) ist.

6. Bremse nach einem der vorhergehenden Ansprüche, wobei der exzentrische Ring (7) mit einem Bremsbelag (10) versehen ist.

7. Bremse nach Anspruch 6, wobei der Bremsbelag (10) von der äußeren Seite her gewellt ist.

8. Bremse nach Anspruch 6 oder 7, wobei der Bremsbelag (10) aus glasfaserverstärktem Polychloropren gebildet ist.

9. Bremse nach einem der vorhergehenden Ansprüche, wobei die Stütze (2) fest mit dem Rahmen des Rollwagens verbindbar ist.

10. Bremse nach einem der Ansprüche 1 bis 8, wobei die Stütze (2) am Rahmen (32) des Rollwagens angelenkt sein kann.

11. Bremse nach Anspruch 10, die ferner einen Kurbelmechanismus (12) und einen zweiten Griff (11) umfasst, wobei der mittlere Teil des Halters (2) über das Kurbelelement (12) am zweiten Griff (11) angelenkt ist, der am Rahmen (32) des Rollwagens angelenkt sein kann, sodass durch Bewegen des zweiten Griffes der exzentrische Ring (7) in eine Position des bidirektionalen Bremsens des Rollwagenrads (30) gebracht werden kann, wenn der erste Griff (4) in der mittleren Position ist.

12. Bremse nach einem der vorhergehenden Ansprüche, die ferner eine Abdeckung (15) umfasst, mit der der exzentrische Ring (7) abgedeckt werden kann.

13. Bremse nach einem der vorhergehenden Ansprüche, die ferner einen ersten (33) und einen zweiten (34) Permanentmagneten umfasst, wobei der erste Permanentmagnet (33) am ersten Griff (4) angeordnet ist und zum exzentrischen Ring (7) zeigt und wobei der zweite Permanentmagnet (34) am exzentrischen Ring (7) gegenüber dem ersten Permanentmagneten (33) angeordnet ist, wenn der erste Griff (4) in seiner mittleren Position ist, wobei der erste (33) und der zweite (34) Permanentmagnet in einer Weise ausgerichtet sind, um sich gegenseitig anzuziehen.

## Revendications

1. Frein (1) pour chariot qui comprend :
un support (2) pouvant être relié par sa première extrémité à un châssis (32) du chariot,
un premier essieu (3) relié à une autre extrémité du support et pourvu périphériquement de trois indentations (3a),
une première poignée (4) avec un cliquet (5), ladite poignée (4) étant disposée de manière pivotante sur ledit premier essieu (3), et la première poignée (4) pouvant prendre trois positions sur le premier essieu (3), qui sont définies par les trois indentations (3a), une broche (6) qui est reliée fermement par l'une de ses extrémités à la première poignée (4) et disposée parallèlement au premier essieu (3) à une distance radiale de celui-ci,
un anneau excentrique (7) avec un fond fermé (7a), dans lequel au moins un évidement arqué (7b) concentrique avec le premier essieu est formé, à travers lequel la broche (6) fait saillie, l'anneau excentrique (7) étant monté de manière pivotante sur le premier essieu (3) et
pouvant venir en prise avec la périphérie extérieure d'une roue de chariot (30),
un ressort de traction (8) reliant la périphérie intérieure de l'anneau excentrique (7) et la broche (6), et
un élément d'arrêt (9) faisant saillie du premier essieu (3), qui peut s'appuyer contre la périphérie intérieure de l'anneau excentrique (7), empêchant ainsi la rotation de l'anneau excentrique (7) autour du premier essieu (3) dans une direction.

2. Frein selon la revendication 1, sur la base d'une sélection par l'utilisateur, la première poignée (4) avec le cliquet (5) pouvant être positionnée dans trois positions correspondant à trois indentations (3a) : une première position d'extrémité, une seconde position d'extrémité, et une position médiane située entre les deux positions d'extrémité.

3. Frein selon l'une quelconque des revendications précédentes, la première poignée (4) avec le cliquet (5), le ressort de traction (8) et l'élément d'arrêt (9) étant alignés lorsque la première poignée (4) est dans la position médiane.

4. Frein selon l'une quelconque des revendications précédentes, le cliquet (5) de la première poignée (4) étant formé d'un ressort de pression (5a) et d'une bille (5b) qui peut venir en prise avec lesdites trois indentations (3a) sur le premier essieu (3).

5. Frein selon l'une quelconque des revendications précédentes, l'anneau excentrique (7) étant ondulé (7c) sur sa périphérie extérieure.

6. Frein selon l'une quelconque des revendications précédentes, l'anneau excentrique (7) étant pourvu d'une plaquette de frein (10).

7. Frein selon la revendication 6, la plaquette de frein (10) étant ondulée depuis le côté extérieur.

8. Frein selon la revendication 6 ou 7, la plaquette de frein (10) étant formée de polychloroprène renforcé de fibres de verre.

9. Frein selon l'une quelconque des revendications précédentes, le support (2) pouvant être fermement relié au châssis du chariot.

10. Frein selon l'une quelconque des revendications 1 à 8, le support (2) pouvant être articulé avec le châssis (32) du chariot.

11. Frein selon la revendication 10, qui comprend en outre un mécanisme à manivelle (12) et une seconde poignée (11), la partie médiane du support (2) étant articulée par l'intermédiaire du mécanisme à manivelle (12) avec la seconde poignée (11) qui peut être articulée avec le châssis (32) du chariot, de sorte qu'en déplaçant la seconde poignée, l'anneau excentrique (7) puisse être amené dans une position de freinage bidirectionnel de la roue de chariot (30), lorsque la première poignée (4) est dans la position médiane.

12. Frein selon l'une quelconque des revendications précédentes, qui comprend en outre un couvercle (15), avec lequel l'anneau excentrique (7) peut être recouvert.

13. Frein selon l'une quelconque des revendications précédentes, qui comprend en outre un premier (33) et un second (34) aimant permanent, le premier aimant permanent (33) étant disposé sur la première poignée (4) en regard de l'anneau excentrique (7), et le second aimant permanent (34) étant disposé sur l'anneau excentrique (7) à l'opposé du premier aimant permanent (33), lorsque la première poignée (4) est dans sa position médiane, le premier (33) et le second (34) aimant permanent étant orientés de sorte à s'attirer mutuellement.
